# EUROPEAN PATENT APPLICATION

(11) **EP 1 486 390 A2**
(43) Date of publication of application: **15.12.2004**
(21) Application number: 04013070.0
(22) Date of filing: 03.06.2004
(51) Int. Cl.: B60S 13/00

(54) **Automated conveyor line system for a motor vehicle**

(30) Priority: 13.06.2003 IT BO20030361
(71) Applicant: Unicom S.r.l., 44042 Cento(Ferrara) (IT)
(72) Inventor: Romagnoli, Antonio, 44042 Cento (Ferrara) (IT); Romagnoli, Luigi, 44066 Pieve di Cento (Bologna) (IT)
(74) Representative: Gustorf, Gerhard, Dipl.-Ing.

(57) **Abstract**

An automated transport line system comprises: a first pair of rails (10a, 10b) extending longitudinally; a wheeled transporting and towing truck (20) designed to support the front wheels (Aa, Ab) of the motor vehicle (A) and to move, on command, longitudinally along the said first pair of rails (10a, 10b); a first rolling surface (21) provided on the said transporting and towing truck (20), designed to enable the wheels of the motor vehicle to roll longitudinally on it; retaining and release means (23a-24a, 23b-24b), positioned on the said transporting and towing truck (20) and designed to retain and release, on command, the front wheels (Aa, Ab) of the motor vehicle (A) when they are positioned on the said first rolling surface (21); and propulsion means (Ma, Mb), designed to translate the said transporting and towing truck (20) longitudinally on command.

## Description

### Technical field

- The present invention relates to an automated transport line system for translating a motor vehicle longitudinally past an inspection scanner along a translation segment.

- More particularly, the present invention relates to a transport line system of the aforesaid type, particularly suitable for translating motor vehicles such as lorries, articulated trucks and articulated buses past an X-ray reading scanner, in an autonomous and automatic way, in other words without requiring the presence of the driver in the cab during the irradiation operations.

### Known art

- At the present time, in order to translate the said motor vehicles past reading scanners, the whole of each vehicle (lorry, articulated truck) and its load is placed on a transporter truck, approximately 18 metres long, which moves autonomously, in other words without a driver, after which the said transporter truck is translated past the inspection scanner along a path which is longer than the length of the motor vehicle, being more than approximately 12-14 metres in some cases, and finally the said motor vehicle (lorry, articulated truck) is unloaded from the said transporter truck.

- This system has a number of drawbacks, arising from the high costs of providing a large transporter truck designed to hold and support the whole vehicle and its load, the high costs of providing the underlying masonry structure on which the said transporter truck moves, and also the high costs of maintaining the requisite safety during the operations of loading the whole vehicle and its load onto the transporter truck and unloading it therefrom, as well as the amount of space required for a longitudinal length of approximately forty-eight metres.

### Object of the invention

- The object of the present invention is to overcome the aforementioned drawbacks.

- The invention, which is characterized by the claims, resolves the problem of creating an automated transport line system for translating a motor vehicle longitudinally past an inspection scanner along a translation segment, this system being particularly suitable for articulated trucks and similar means of transport, the said system being characterized in that it comprises: a first pair of rails extending longitudinally; a wheeled transporting and towing truck designed to support the front wheels of the motor vehicle and to move, on command, longitudinally along the said first pair of rails; a first rolling surface provided on the said transporting and towing truck, designed to enable the wheels of the motor vehicle to roll longitudinally on it; retaining and release means, positioned on the said transporting and towing truck and designed to retain and release, on command, the front wheels of the motor vehicle when they are positioned on the said first rolling surface; and propulsion means, designed to translate the said transporting and towing truck longitudinally on command.

- The use of the automated transport line system according to the present invention yields the following results: it is possible to carry out the translation of the motor vehicle past the inspection scanner without having to load the whole vehicle onto a transport truck, it is unnecessary to provide a large transport truck designed to support the whole vehicle and its load, and it is unnecessary to provide a heavy masonry structure designed to support the said transport truck.

- The advantages obtained by means of the present invention consist, substantially, in the fact that a translation line system is obtained which is simpler and more economical to construct, is safer, and has smaller overall dimensions.

- Further characteristics and advantages of the present invention will be made clearer by the following detailed description of some preferred practical embodiments of the invention, provided here purely by way of example and without restrictive intent, with reference to the figures of the attached drawings, in which:
Figs. 1 to 1l show schematically some operating steps of some embodiments of the transport line system according to the present invention;
Figs. 2 and 2A show schematically, in a plan view and a side view respectively, the transport line system according to the present invention;
Fig. 3 is a front view of a detail of construction relating to the transporting and towing truck;
Figs. 4 and 4A show two further details of construction relating to the platforms;
Figs. 5, 5A and 5B show a variant embodiment of the upline platform.

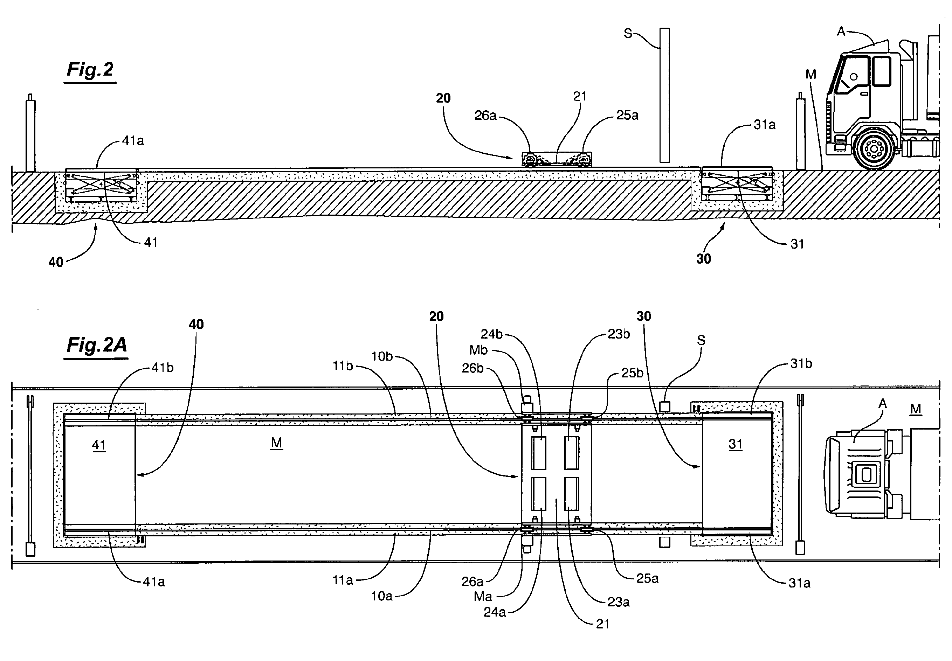

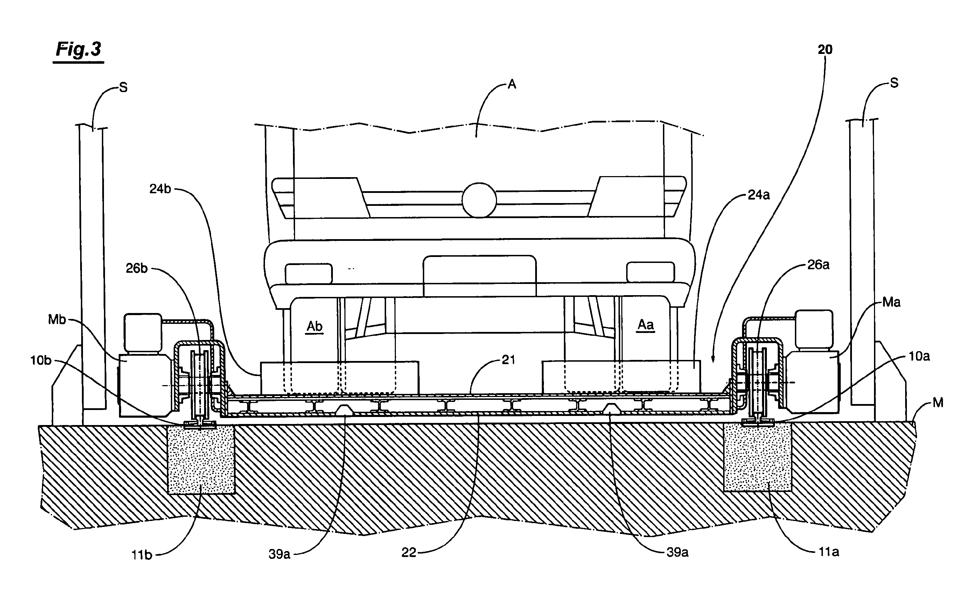

- With reference to Figures 2, 2A, 3 and 4, the automated transport line system for translating a motor vehicle A longitudinally past an inspection scanner S along a translation segment comprises a first pair of rails 10a and 10b, extending longitudinally, which are supported longitudinally preferably by means of reinforced concrete bases 11 a and 11 b respectively, the tops of which are coplanar with respect to the bed M on which the motor vehicle A stands.

- A wheeled transporting and towing truck 20, designed to support the front wheels Aa and Ab of the motor vehicle A, has a chassis 22 having on its top a first rolling surface 21, designed to allow the wheels of the motor vehicle A to roll longitudinally on it, and has retaining and release means 23a-24a and 23b-24b operating above the said rolling surface 21 and supported by the chassis 22, these means being designed to raise stops in order to retain or release, on command, the front wheels Aa-Ab of the motor vehicle A when the said wheels Aa-Ab are positioned on top of the said first rolling surface 21.

- The said chassis 22 also has four supporting wheels 25a-26a and 25b-26b, designed to roll along the rolling surface of the said rails 10a and 10b.

- In order to achieve the translation of the wheeled transporting and towing truck 20, propulsion means are provided, for example two hydraulic motors and/or two electric servo motors, Ma and Mb, which can act on the wheels 25a and 25b, or on the four wheels by means of a mechanical transmission, or by means of a single motor and a corresponding transmission.

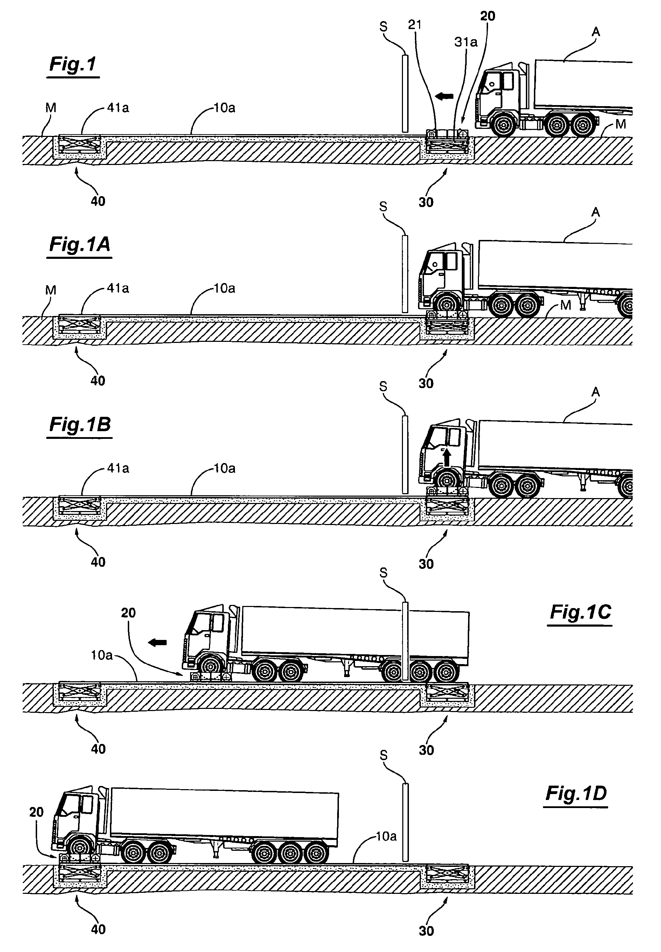

- With this structure (see Figs. 1B-1D), the front wheels Aa-Ab of the motor vehicle A are positioned on top of the said first rolling surface 21 of the transporting and towing truck 20, using for example inclined-plane wedge-like ramps to be positioned between the front wheels Aa-Ab and the riser of the step formed between the first rolling surface 21 and the bed M during the said rising step, after which the retaining and release means 23a-24a, 23b-24b are operated in order to retain the front wheels Aa-Ab of the said motor vehicle A on the said first rolling surface 21 of the transporting and towing truck 20.

- The driver is then asked to alight, and, when he has moved outside the contamination zone, the inspection scanner S is operated and the propulsion means Ma-Mb are then activated in order to translate the said transporting and towing truck 20 longitudinally downline, thus towing the motor vehicle A past the inspection scanner S along a translation segment.

- The system described above preferably comprises an upline platform 30 and a downline platform 40.

### Upline platform 30

- The said upline platform 30 substantially has a longitudinal and transverse extension such that it can support the transporting and towing truck 20 on top of it, is vertically movable on command, and comprises on its top a second rolling surface 31, designed to allow the longitudinal rolling of the wheels of the motor vehicle, the said second rolling surface 31 having a second pair of rails 31a-31b, extending longitudinally, which lie in corresponding vertical and longitudinal planes aligned longitudinally with the longitudinal and vertical planes in which the first rails 10a and 10b lie.

- More particularly, the said upline platform 30, in the present example of embodiment, has an articulated lifting frame 32 and corresponding operating means 33, which are positioned within a well 34 extending vertically downwards from the plane of the bed M on which the motor vehicle A stands, the said well 34 preferably being formed by reinforced concrete casting.
In this context it is evident that other operating means, such as four hydraulic cylinders supporting the vertices of the square platform 30, and/or other systems, can be used to raise and lower the platform.

- The said platform 30, for reasons which are made clear below, has first stabilizer means 35, designed to stabilize the said platform 30 at least in a lowered position and in a raised position, the said stabilizer means 35 comprising, for example, axially movable pins 36, supported by the platform 30, which are designed to be inserted, on command, into housings 37a, in order to stabilize the raised position, or into housings 37b, in order to stabilize the lowered position, the said housings 37a and 37b being formed in the inner walls of the well 34.

- The said platform 30, for reasons which are made clear below, also has locking and release means 38, designed to lock or release the chassis 22 of the transporting and towing truck 20 with respect to the said platform 30, when the said transporting and towing truck 20 is located on top of the said platform 30.

- The said locking and release means 38 comprise, for example, axially movable pins 39, supported vertically by the platform 30, which are designed to be inserted, on command, into housings 39a formed in the lower part of the truck 20.

### Downline platform 40

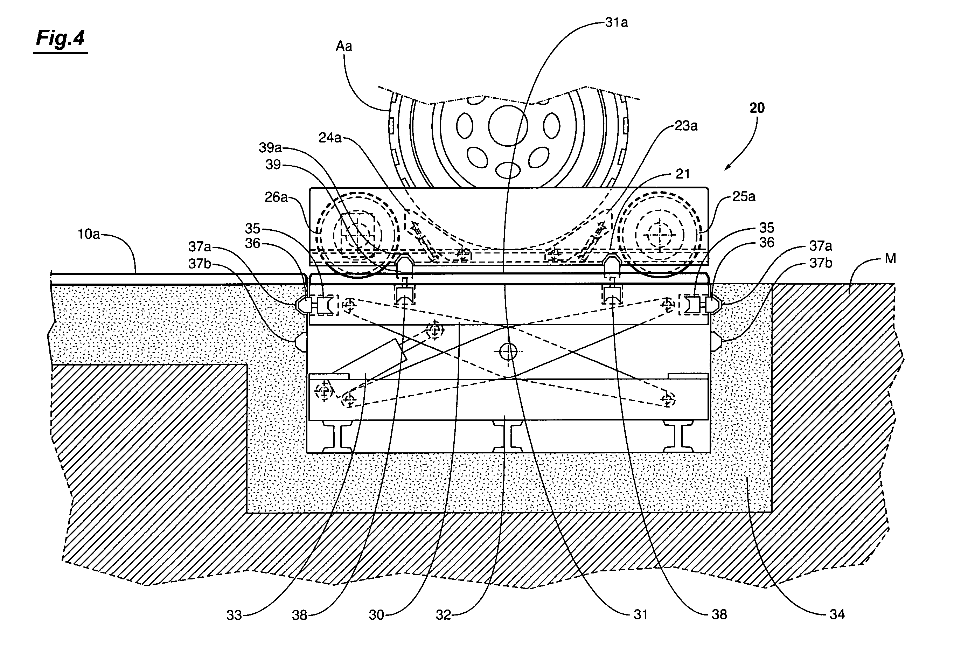

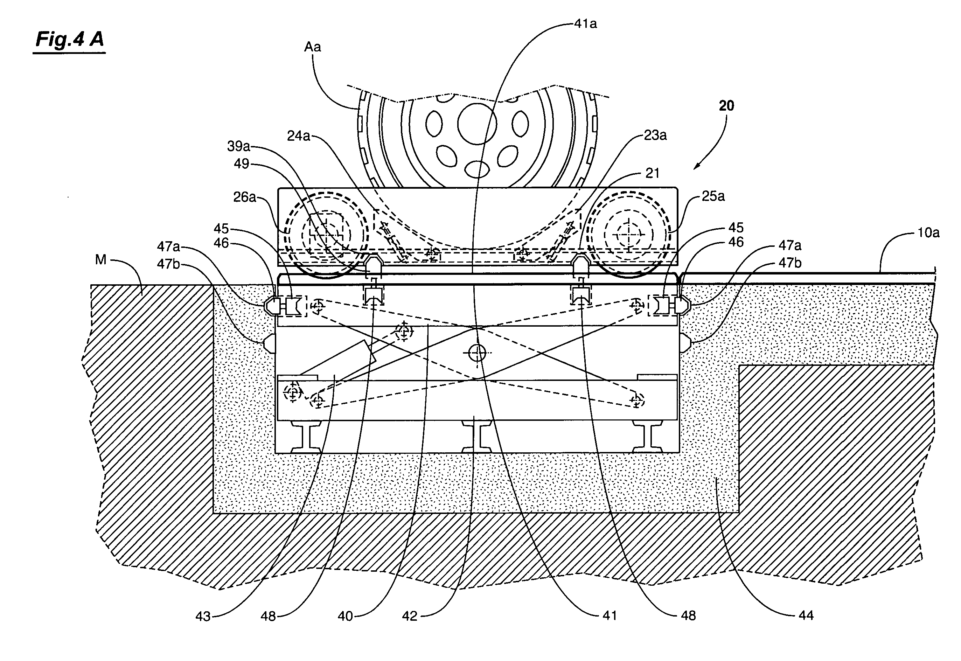

- Downline from the track 10a-10b (see Fig. 4A), there is positioned a platform 40, which is substantially similar to the platform 30 positioned upline and shown in Fig. 4, and therefore a brief description of the downline platform is provided below, using numbering similar to that of the preceding description.

- The said platform 40 comprises: a third rolling surface 41, on which is positioned a third pair of rails 41a-41b, extending longitudinally, which lie in corresponding vertical and longitudinal planes aligned longitudinally with the longitudinal and vertical planes in which the first rails 10a and 10b lie; a lifting frame 42 and corresponding operating means 43, positioned within a well 44, second stabilizer means 45, designed to stabilize the lowered position and/or the raised position of the said platform 40, comprising, for example, axially movable pins 46, supported by the platform 40, which are designed to be inserted, on command, into housings 47a and 47b formed in the inner walls of the well 44; locking and release means 48, designed to lock or release the transporting and towing truck 20 with respect to the said platform 40, when the said transporting and towing truck 20 is located on top of the said platform 40, the said locking and release means 48 comprising, for example, axially movable pins 49, supported by the platform 40, which are designed to be inserted into housings 49a formed in the lower part of the truck 20.

### Operation of the system with the upline platform 30 and downline platform 40

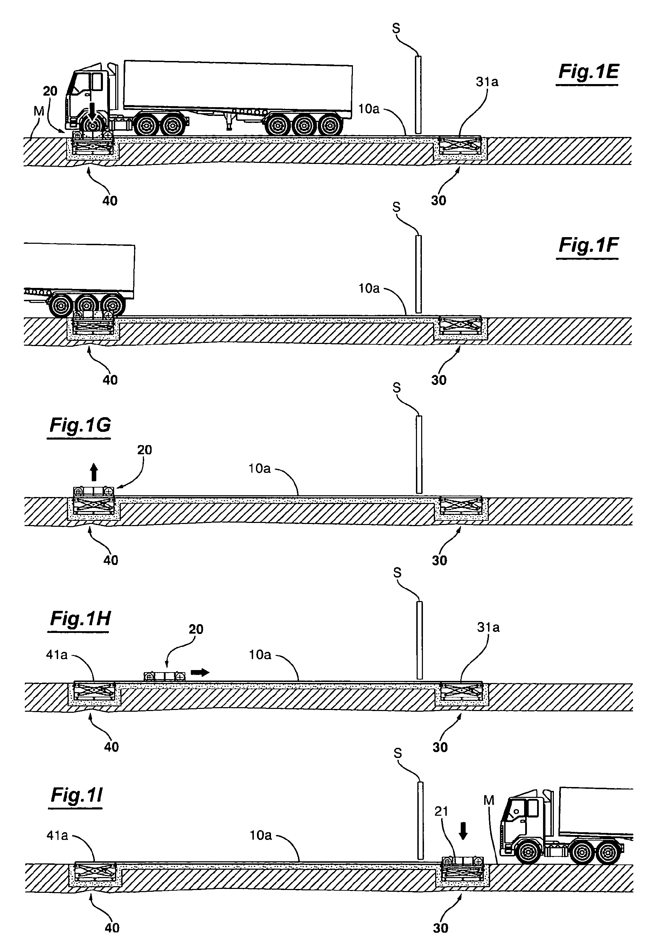

- With reference to Figures 1 to 1I, these show the operation of the system described above.

- With reference to Figure 1, the truck 20 is positioned on rails 31a-31b of the upline platform 30, which is in its lowered position, with stabilizer means 35 having their pins 36 inserted into the housings 37b, and with the locking and release means 38 having their pins 39 inserted into the housings 39a.

- In this operating configuration, the first rolling surface 21 of the transporting and towing truck 20 is positioned so that it is coplanar and substantially contiguous with the plane of the bed M on which the motor vehicle A stands, and therefore (see Fig. 1A) the driver in the cab moves the motor vehicle A downline, until the front wheels Aa and Ab are positioned on top of the rolling surface 21 of the truck 20, and the operator of the transport line system moves the locking and release means 23a-24a and 23b-24b to the raised position, to retain the front wheels Aa and Ab of the motor vehicle A.

- The driver then alights from the cab and moves to a safe zone which is not reached by the radiation, and, by either manual or automatic means, the stabilizer means 35 are moved to the release position and the upline platform 30 is raised until it is placed in its raised position, the said raised position then being stabilized by the operation of the stabilizer means 35, which insert the pins 36 into the housings 37a.

- In this operating configuration, the second rolling surface 31 is coplanar with the bed M, the rolling surfaces of the rails 31a and 31b supported by the upline platform 30 are coplanar with and adjacent to the rolling surfaces of the central rails 10a and 10b, and therefore (see Fig. 1C), after the locking and release means 38 have been operated to release the truck 20 by the extraction of the pins 38 from the housings 39a, and after the inspection scanner S has been activated, the propulsion means Ma and Mb are activated, in order to translate the motor vehicle A forwards with the correct linear velocity past the scanner S.

- In the proximity of the downline zone, the platform 40 is placed in its raised position and stabilized by means of the stabilizer means 45-46-47a, so that the rolling surfaces of the rails 41a and 41b are made coplanar with and adjacent to the rolling surfaces of the rails 10a and 10b, and the transporting and towing truck 20, as shown in Fig. 1D, advances in the downline direction, and is positioned and halted on top of the said downline platform 40.

- When the truck 20 is halted on the platform 40, the locking and release means 48 insert the pins 49 into the housings 39a, in order to lock the truck 20, and the parking means 45 then extract the pins 46 from the housings 47a, in order to release the downline platform 40, which can then descend to its lowered position, the said lowered position then being stabilized by the operation of the said stabilizer means 45 which insert the pins 46 into the housings 47b (see Fig. 1E).

-In this operating configuration, the rolling surface 21 of the transporting and towing truck 20 is coplanar with and adjacent to the bed M, and therefore, when the driver has returned to the cab, the locking and release means 23a-24a and 23b-24b are operated to release the front wheels Aa and Ab, and the driver then drives away the inspected vehicle (see Fig. 1F).

- Subsequently, after the stabilizer means 35 have been operated to release the downline platform 40, the said platform 40 is raised and is placed in the raised position (Fig. 1G) in order to make the rails 41a-41b and 10a-10b coplanar with each other, the locking and release means 48 are operated to release the truck 20, and the propulsion means Ma and Mb are operated to cause the return of the said truck 20 (see Fig. 1H).

- Finally, the truck 20 is positioned on top of the upline platform 30, after which the truck 20 is locked by means of the locking and release means 38, the said platform is moved to the lowered position, and the said lowered position is stabilized by means of the stabilizer means 35, thus producing the configuration shown in Fig. 1l which corresponds to the start of cycle configuration shown in Fig. 1.

### System with tilting upline platform 130

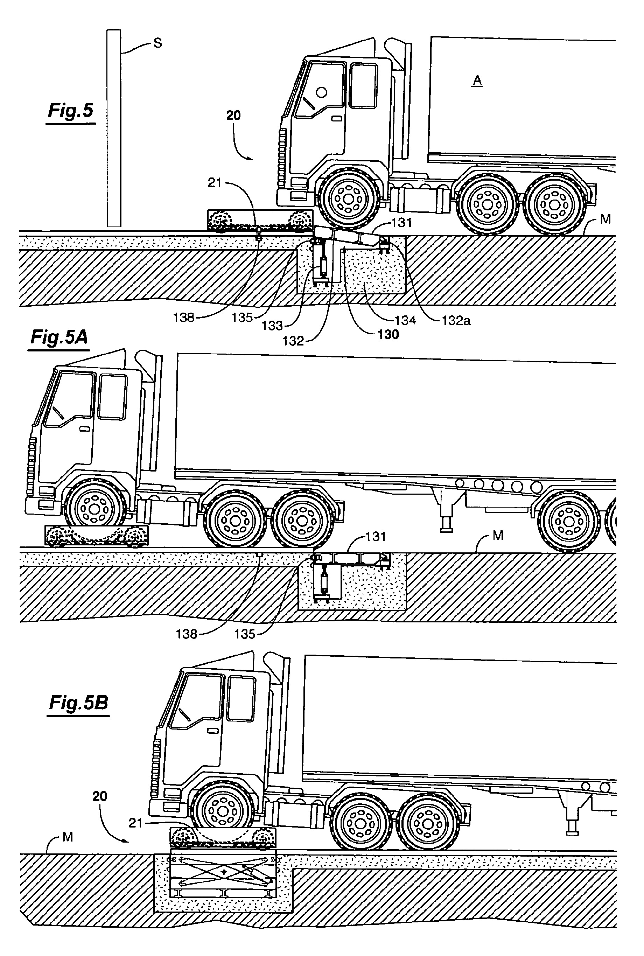

- With reference to Figs. 5, 5A and 5B, these show a variant embodiment of the present invention in which the upline platform 30 of the preceding embodiment is replaced with a tilting platform 130, the latter having a longitudinal and transverse extension such that it has a second rolling surface 131 on its top.

The said platform 130, in the present embodiment, has a frame 132 and corresponding operating means 133 positioned within a well 134, the said frame 132 having a pivot arrangement 132a positioned upline and designed to support the upline end of the platform 130, the said operating means 133 being designed to raise, on command, the downline end of the said platform 130, so that it can be placed in a raised position (Fig. 5) in which the downline end of the rolling surface 131 of the said platform 130 is positioned at the same height as the rolling surface 21 of the truck 20, or in a lowered position (Fig. 5A) in which the rolling surface 131 of the said platform 130 is made coplanar with the plane of the bed M on which the motor vehicle A stands.

- Additionally, for the reasons which are made clear below, stabilizer means 135 are provided and are designed to stabilize the tilted position and the lower position for the said platform, and locking and release means 138 are provided in the base and are designed to lock or release the truck 20 when it is positioned in the proximity of the platform 130.

- The said stabilizer means 135 and the said locking and release means 138 can be of the type described previously in relation to the preceding embodiment, or of any other type.

### Operation of the system with the tilting upline platform

- With this structure (see Fig. 5), the transporting and towing truck 20 is positioned in the proximity of the platform 130, the platform being placed in the tilted position, with the stabilizer means 135 stabilizing this tilted position and the locking and release means 138 keeping the truck 20 locked and therefore immovable with respect to the concrete base.

- In this operating configuration, the driver positions the front wheels Aa-Ab of the motor vehicle A on top of the rolling surface 21 of the truck 20, by making it roll along the tilted surface 131 of the platform 130, and the operator then activates the retaining and release means 23a-24a, 23b-24b present on the said truck 20 in order to retain the wheels Aa and Ab, after which he places the platform 130 in the lowered position, in order to make the corresponding rolling surface 131 coplanar with the bed M.

- The driver then alights from the cab and moves to a safe zone, after which, by manual or automatic means, the operator activates the locking and release means 138 in order to release the truck 20 from the base, and then operates the propulsion means Ma and Mb in order to translate the motor vehicle A past the inspection scanner S (see Fig. 5A).

- At the end of its downline travel, the truck 20 arrives on top of the platform 40 as in the preceding embodiment, and therefore the same operations as those described above are carried out to enable the motor vehicle A to be driven away.

- When the motor vehicle has been driven away, the truck 20 is returned to its upline position and the platform 130 is raised, thus producing the start of cycle configuration.

- The description of the automated transport line system for translating a motor vehicle longitudinally past an inspection scanner along a translation segment has been provided purely by way of example and without restrictive intent, and therefore it can evidently be modified and/or varied in any way suggested by experience and/or by its use or application, where there is no departure from the scope of the following claims.

## Claims

1. Automated transport line system for translating a motor vehicle longitudinally past an inspection scanner along a translation segment, particularly suitable for articulated trucks and similar means of transport,
**characterized in that** it comprises:
- a first pair of rails (10a, 10b) extending longitudinally;
- a wheeled transporting and towing truck (20) designed to support the front wheels (Aa, Ab) of the motor vehicle (A) and to move, on command, longitudinally along the said first pair of rails (10a, 10b);
- a first rolling surface (21) provided on the said transporting and towing truck (20), designed to enable the wheels of the motor vehicle to roll longitudinally on it;
- retaining and release means (23a-24a, 23b-24b), positioned on the said transporting and towing truck (20) and designed to retain and release, on command, the front wheels (Aa, Ab) of the motor vehicle (A) when they are positioned on the said first rolling surface (21); and
- propulsion means (Ma, Mb), designed to translate the said transporting and towing truck (20) longitudinally on command.

2. Automated transport line system according to Claim 1, **characterized in that** the following operations are carried out:
- the front wheels (Aa, Ab) of the motor vehicle (A) are positioned on top of the said first rolling surface (21) of the transporting and towing truck (20);
- the retaining and release means (23a-24a, 23b-24b) are operated in order to retain the front wheels of the said motor vehicle (A) on the said first rolling surface (21) of the transporting and towing truck;
- the propulsion means (Ma, Mb) are operated in order to translate the said transporting and towing truck (20) longitudinally and therefore to tow the motor vehicle (A) past the inspection scanner (S) along the translation segment.

3. Automated transport line system according to Claim 1 or 2, **characterized in that** it comprises a platform (30) positioned upline, having a longitudinal and transverse extension such that it can support the transporting and towing truck (20), **in that** the said platform (30) is vertically movable on command, **in that** the said platform (30) has on its top a second rolling surface (31) designed to allow the wheels of the motor vehicle to roll longitudinally, **in that** the said platform (30) has on its top a second pair of rails (31a, 31b) extending longitudinally and lying in vertical and longitudinal planes aligned longitudinally with respect to the longitudinal and vertical planes in which the first rails (10a, 10b) lie.

4. Automated transport line system according to any one of the preceding claims, **characterized in that** the following operations are carried out:
- the said upline platform (30) is placed in a raised position in which the rolling surfaces of the second rails (31a, 31b) are coplanar with the rolling surfaces of the first rails (10a, 10b);
- the transporting and towing truck (20) is positioned on the said second pair of rails (31a, 31b) of the said platform (30);
- the said platform (30) is placed in a lowered position in which the first rolling surface (21) of the transporting and towing truck (20) is coplanar with the plane (M) of the bed on which the motor vehicle (A) stands;
- the motor vehicle (A) is moved forwards until the front wheels (Aa, Ab) of the motor vehicle (A) are positioned on top of the said first rolling surface (21) of the transporting and towing truck (20);
- the retaining and release means (23a-24a, 23b-24b) are operated in order to retain the front wheels (Aa, Ab) of the said motor vehicle (A) on the said first rolling surface (21);
- the said platform (30) is placed in a raised position in which the rolling surfaces of the second rails (31a, 31b) are coplanar with the rolling surfaces of the first rails (10a, 10b) and the second rolling surface (31) of the platform (30) is coplanar with the plane of the bed (M) on which the rear wheels of the motor vehicle (A) stand;
- the propulsion means (Ma, Mb) are operated in order to translate the said transporting and towing truck (20) longitudinally and to tow the motor vehicle (A) past the inspection scanner (S) along the translation segment.

5. Automated transport line system according to any one of the preceding claims, **characterized in that** the said platform (30) has a lifting frame (32) and the corresponding operating means (33) positioned in a well (34) extending vertically downwards from the plane of the bed (M) on which the motor vehicle (A) stands.

6. Automated transport line system according to any one of the preceding claims, **characterized in that** it comprises stabilizer means (35) designed to stabilize a lowered position and/or a raised position for the said platform (30).

7. Automated transport line system according to Claim 6, **characterized in that** the said stabilizer means (35) comprise axially movable pins (36) supported by the platform (30) and designed to be inserted into housings (37a, 37b) formed in the walls of a well (34).

8. Automated transport line system according to any one of the preceding claims, **characterized in that** it comprises locking and release means (38) designed to lock or release the transporting and towing truck (20) with respect to the platform (30) when the said transporting and towing truck (20) is positioned on top of the said platform (30).

9. Automated transport line system according to Claim 8, **characterized in that** the said locking and release means (38) comprise axially movable pins (39) supported by the platform (30) and designed to be inserted into housings (39a) formed in the transporting and towing truck (20).

10. Automated transport line system according to Claim 1, **characterized in that** it comprises an upline platform (130), extending longitudinally and tiltable on command, **in that** the said upline platform (130) comprises on its top a second rolling surface (131) designed to allow the wheels of the motor vehicle to roll longitudinally, **in that** the said upline platform (130), in its lowered position, has the said second rolling surface (131) coplanar with the plane of the bed (M) on which the motor vehicle (A) stands, and, in its tilted position, has the said second rolling surface (131) tilted upwards in the downline direction with respect to the direction of translation of the motor vehicle (A), with the downline end positioned at the same height as the first rolling surface (21) of the transporting and towing truck (20).

11. Automated transport line system according to Claim 10, **characterized in that** the following operations are carried out:
- the said platform (130) is placed in the tilted position; the transporting and towing truck (20) is placed in the proximity of the said platform (130);
- the motor vehicle (A) is moved forwards until the front wheels (Aa, Ab) of the motor vehicle (A) are positioned on top of the said first rolling surface (21) of the transporting and towing truck (20), the front wheels (Aa, Ab) being made to roll along the second rolling surface (131) positioned so that it tilts upwards;
- the retaining and release means (23a-24a, 23b-24b) are operated in order to retain the front wheels (Aa, Ab) of the said motor vehicle (A) on the said first rolling surface (21);
- the said platform (130) is lowered until the second rolling surface (131) is made coplanar with the plane of the bed (M) on which the wheels of the motor vehicle (A) stand;
- the propulsion means (Ma, Mb) are operated in order to translate the said transporting and towing truck (20) longitudinally and to tow the motor vehicle (A) past the inspection scanner (S) along the translation segment.

12. Automated transport line system according to either of Claims 10 and 11, **characterized in that** the said platform (130) has a frame (132) and the corresponding operating means (133) positioned in a well (134) extending vertically downwards from the plane of the bed (M) on which the motor vehicle (A) stands.

13. Automated transport line system according to any one of Claims 10 to 12, **characterized in that** the said platform (130) has stabilizer means (135) designed to stabilize the tilted position and/or the lowered position of the said platform (130).

14. Automated transport line system according to any one of Claims 10 to 13, **characterized in that** it has locking and release means (138) designed to lock or release the transporting and towing truck (20) when this is placed in its position in the proximity of the upline platform (130).

15. Automated transport line system according to any one of the preceding claims, **characterized in that** it comprises a downline platform (40) having a longitudinal and transverse extension such that it can support the transporting and towing truck (20), **in that** the said platform (40) is movable vertically on command, **in that** the said platform (40) has on its top a third pair of rails (41a, 41b) extending longitudinally and lying in vertical and longitudinal planes aligned longitudinally with respect to the longitudinal and vertical planes in which the first rails (10a, 10b) lie.

16. Automated transport line system according to Claim 15, **characterized in that** the following operations are carried out:
- the said platform (40) is placed in a raised position in which the rolling surfaces of the third rails (41a, 41b) are coplanar with the rolling surfaces of the first rails (10a, 10b);
- the transporting and towing truck (20) is placed on the said third pair of rails (41a, 41b) of the said platform (40);
- the said platform (40) is placed in a lowered position in which the first rolling surface (21) of the transporting truck (20) is coplanar with the plane of the bed (M) on which the motor vehicle (A) is positioned;
- the retaining and release means (23a-24a, 23b-24b) positioned on the said transporting and towing truck (20) are operated in order to release the front wheels (Aa, Ab) of the said motor vehicle (A) from the said first rolling surface (21).

17. Automated transport line system according to either of Claims 15 and 16, **characterized in that** the said platform (40) has a lifting frame (42) and the corresponding operating means (43) positioned in a well (44) extending vertically downwards from the plane of the bed (M) on which the motor vehicle (A) stands.

18. Automated transport line system according to any one of Claims 15 to 17, **characterized in that** the said platform (40) has second stabilizer means (45) designed to stabilize a lowered position and/or a raised position of the said platform (40).

19. Automated transport line system according to Claim 18, **characterized in that** the said stabilizer means (45) comprise axially movable pins (46) supported by the platform (40) and designed to be inserted into housings (47a, 47b) formed in the walls of a well (44).

20. Automated transport line system according to any one of Claims 15 to 19, **characterized in that** it has locking and release means (48) designed to lock or release the transporting and towing truck (20) with respect to the downline platform (40) when the said transporting and towing truck (20) is placed on top of the said platform (40).

21. Automated transport line system according to Claim 20, **characterized in that** the said locking and release means (48) comprise axially movable pins (49) supported by the platform (40) and designed to be inserted into housings (39a) formed in the transporting and towing truck (20).

22. Automated transport line system according to any one of the preceding claims, **characterized in that** the said propulsion means (Ma, Mb) are supported by the transporting and towing truck (20).

23. Automated transport line system according to any one of the preceding claims, **characterized in that** the said propulsion means (Ma, Mb) comprise one or more hydraulic motors supported by the transporting and towing truck (20).

24. Automated transport line system according to any one of the preceding claims, **characterized in that** the said propulsion means (Ma, Mb) comprise one or more electric servo motors supported by the transporting and towing truck (20).
